**Europäisches Patentamt**

**European Patent Office**

**Office européen des brevets**

(19)

(11) Veröffentlichungsnummer : **0 365 060 B1**

## (12) EUROPÄISCHE PATENTSCHRIFT

(45) Veröffentlichungstag der Patentschrift :
**08.07.92 Patentblatt 92/28**

(51) Int. Cl.$^5$ : **B01D 1/26**

(21) Anmeldenummer : **89202224.5**

(22) Anmeldetag : **02.09.89**

(54) Verfahren und Vorrichtung zum Aufkonzentrieren von Lösungen.

(30) Priorität : **12.10.88 DE 3834716**

(43) Veröffentlichungstag der Anmeldung :
**25.04.90 Patentblatt 90/17**

(45) Bekanntmachung des Hinweises auf die
Patenterteilung :
**08.07.92 Patentblatt 92/28**

(84) Benannte Vertragsstaaten :
**AT DE ES FR SE**

(56) Entgegenhaltungen :
**DE-B- 1 102 702**
**US-A- 4 364 794**

(73) Patentinhaber : **METALLGESELLSCHAFT**
**AKTIENGESELLSCHAFT**
**Reuterweg 14 Postfach 10 15 01**
**W-6000 Frankfurt 1 (DE)**

(72) Erfinder : **Hohmann, Klaus**
**Waldstrasse 5**
**W-6238 Hofheim (DE)**
Erfinder : **Mai, Manfred**
**Atzelbergplatz 4**
**W-6000 Frankfurt am Main 60 (DE)**

## Beschreibung

Die Erfindung betrifft ein Verfahren zum Eindampfen von Lösungen durch mehrstufiges Verdampfen in indirekt beheizten Verdampfern, wobei die Lösung unter Verwenden von Brüden als Heizmedium teilweise konzentriert und die höchste Konzentration der Lösung in einer anschließenden, mit Frischdampf beheizten Verdampfer-Endstufe erreicht wird, sowie eine Vorrichtung hierzu.

Das Verfahren und die Anlage eignen sich für die Behandlung verschiedenartiger Lösungen, als Beispiel sei die Konzentrierung von Schwarzlauge aus der Zellstofffabrikation genannt.

Der Erfindung liegt die Aufgabe zugrunde, auf möglichst wirtschaftliche Weise eine hohe Endkonzentration zu erreichen und dabei störende Verkrustungen zu vermeiden. Erfindungsgemäß geschieht dies dadurch, daß die Verdampfer-Endstufe aus zwei bis vier Fallfilmverdampfern besteht, die mit Frischdampf indirekt beheizt und nacheinander von der Lösung durchflossen werden, daß man aus dem Fallfilmverdampfer der Endstufe, dem man die Lösung zuerst zuführt, Brüden abzieht und mindestens einen Teil dieser Brüden in mindestens einem der anderen Fallfilmverdampfer der Endstufe mit der Lösung bei deren Abwärtsfließen durch die beheizte Zone in direkten Kontakt bringt. Die erfindungsgemäße Eindampfanlage ist entsprechend ausgebildet.

Für die Endstufe kommen nur Fallfilmverdampfer in Betracht. Die sonst üblichen, aufwendigeren Zwangsumwälzverdampfer sind nicht nötig. In den Fallfilmverdampfern der Endstufe erzeugen die zugeführten Brüden eine hohe Turbulenz im abwärtsfließenden Flüssigkeitsfilm, wodurch die Wärmeübertragung verbessert wird. Gleichzeitig wirken die Brüden der Ausbildung von Ansätzen und Verkrustungen entgegen, so daß längere Betriebszeiten der Verdampfer erreicht werden. Ohne Schwierigkeiten können die Zu- und Ableitungen der Verdampfer der Endstufe so ausgebildet werden, daß durch einfaches Umschalten jedem der Fallfilmverdampfer abwechselnd die Lösung zuerst zugeführt werden kann. Ein besonderer Vorteil des Verfahrens ist es, daß in der Endstufe nur Brüden mit gleichem Wärmeniveau verwendet werden.

Wenn die Verdampfer-Endstufe aus drei oder vier Fallfilmverdampfern besteht, kann man die Brüden aus dem Verdampfer, dem man die Lösung zuerst zuführt, auch auf alle übrigen Verdampfer der Endstufe verteilen.

Es empfiehlt sich, im Fallfilmverdampfer der Endstufe, dem man die Lösung zuerst zuführt, bei einem etwas höheren Druck als in den anderen Fallfilmverdampfern der Endstufe zu arbeiten. Dadurch wird es möglich, die Brüden aus dem einen Verdampfer in den oder die anderen ohne ein Gebläse zu leiten. Hierfür empfiehlt sich eine Druckdifferenz zwischen den Verdampfern im Bereich von 5 bis 300 mbar. Der höhere Druck in dem einen Fallfilmverdampfer stellt sich in der Praxis von selbst ein, wenn man den Brüdenaustritt zu den anderen Verdampfern genügend drosselt.

Einzelheiten des Verfahrens und der Anlage werden mit Hilfe der Zeichnung erläutert. Es zeigt:

Fig. 1 die Verdampfer-Endstufe in schematischer Darstellung und

Fig. 2 einen Fallfilmverdampfer der Endstufe mit Brüdenzufuhr.

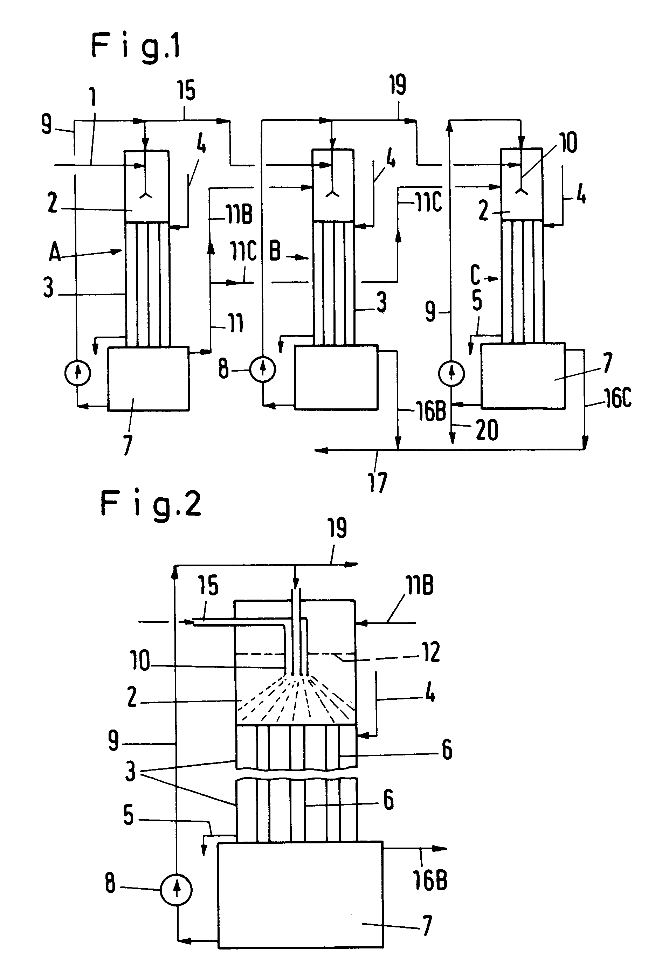

Die bereits teilweise in einem nicht dargestellten Abschnitt der Eindampfanlage aufkonzentrierte Lösung wird in der Leitung (1) herangeführt und dem Verdampfer (A) der Verdampfer-Endstufe (Fig. 1) aufgegeben. Die Endstufe besteht aus den Fallfilmverdampfern (A), (B) und (C), die im Prinzip gleich ausgebildet und deren wesentliche Einzelheiten aus Fig. 2 ersichtlich sind. Jeder Verdampfer weist einen oberen Einlaßraum (2), eine Heizzone (3) mit einer Zufuhrleitung (4) für Frischdampf und eine Ableitung (5) für Kondensat auf. Der Frischdampf dient zum indirekten Beheizen der Lösung, die von oben nach unten durch Röhren (6) (vgl. Fig. 2) entlang deren Innenseite nach unten in einen Ausdampfbehälter (7) fließen. Brüden werden durch die Leitung (11) abgezogen. Anstelle der Röhren (6) können die Verdampfer in bekannter Weise z.B. durch senkrechte Platten gebildete Kammern aufweisen.

Ein Teil der Lösung wird durch die Pumpe (8) und die Leitung (9) im Kreislauf geführt. Von einem anderen Verdampfer kommende Lösung und die im Kreislauf geführte Lösung werden gemeinsam durch einen Sprühkopf (10) geleitet und nach unten versprüht. Sofern dem Einlaßraum (2) auch Brüden von einem anderen Verdampfer zugeführt werden, vgl. Leitung (11b) in Fig. 2, kann im Raum (2) zwischen der Mündung der Leitung (11b) und der Mündung des Sprühkopfes (10) ein Verteilerboden (12) vorgesehen sein. Der Boden (12), der gelocht oder siebartig ausgebildet ist, sorgt für eine möglichst gleichmäßige Verteilung der Brüden über die Einlässe der Röhren (6). Der Boden (12) ist jedoch nicht unbedingt notwendig.

Die Arbeitsweise der in Fig. 1 dargestellten Verdampfer-Endstufe ist folgende: Die in der Leitung (1) herangeführte, bereits teilweise konzentrierte Lösung wird zusammen mit im Kreislauf geführter Lösung im Einlaßraum (2) des Verdampfers (A) versprüht und durch die zugehörige Heizzone (3) nach unten geleitet. Aufkonzentrierte Lösung wird in der Leitung (15) abgezweigt und dem Verdampfer (B) zugeführt. Die im Verdampfer (A) entstehenden Brüden, deren Druck etwas höher ist als der Druck, der in den Einlaßräumen der Verdampfer (B) und (C) herrscht, werden zum Teil durch die Leitung (11b) zum Verdampfer (B) und teilweise durch die Leitung (11c) zum Verdampfer (C) geführt. Die in den Verdampfern (B) und (C) entstehenden Brüden werden in den Leitungen (16B) und (16C) abgezogen und in der Sammelleitung (17) zum Beheizen dem anderen, nicht dargestellten Teil der Eindampfanlage zugeführt. Im Kreislauf geführte Lösung des Verdampfers (B) wird teilweise in der Leitung (19) abgezweigt und dem Verdampfer (C) aufgegeben, wo die Endkonzentration erreicht wird. Hochkonzentrierte Lösung zieht man aus der Eindampfanlage in der Leitung (20) ab.

Beispiel

In einer der Zeichnung entsprechenden Verdampfer-Endstufe mit drei Fallfilmverdampfern wird aus vorgeschalteten Verdampfern kommende Schwarzlauge mit 45 % Trockensubstanz in der Leitung (1) herangeführt. Die Schwarzlauge stammt aus der Zellstoffabrikation. Dem Verdampfer (B) wird in der Leitung (15) Lauge mit 55 % Trockensubstanz und dem Verdampfer (C) in der Leitung (19) Lauge mit 67 % Trockensubstanz zugeführt. Die Endkonzentration der Lauge in der Leitung (20) beträgt 75 % Trockensubstanz. Um dieses Ziel zu erreichen, führt man den Verdampfern durch die Leitung (4) Frischdampf mit 145°C zu und zieht in der Leitung (11) Brüden mit einer Sattdampftemperatur von 116°C ab. Die Brüden in den Leitungen (16B) und (16C) haben eine Sattdampftemperatur von 115°C. Der Unterschied zwischen den Brüdentemperaturen des Verdampfers (A) und der Verdampfer (B) und (C) stellt sich entsprechend der Druckverluste in den Leitungen (11, 11B) und (11C) von selbst ein. Der Druck im Verdampfer (A) ist 60 mbar höher ist als in den Verdampfern (B) und (C).

## Patentansprüche

1. Verfahren zum Eindampfen von Lösungen durch mehrstufiges Verdampfen in indirekt beheizten Verdampfern, wobei die Lösung unter Verwenden von Brüden als Heizmedium teilweise konzentriert und die höchste Konzentration der Lösung in einer anschließenden, mit Frischdampf beheizten Verdampfer-Endstufe erreicht wird, dadurch gekennzeichnet, daß die Verdampfer-Endstufe aus zwei bis vier Fallfilmverdampfern besteht, die mit Frischdampf indirekt beheizt und nacheinander von der Lösung durchflossen werden, daß man aus dem Fallfilmverdampfer der Endstufe, dem man die Lösung zuerst zuführt, Brüden abzieht und mindestens einen Teil dieser Brüden in mindestens einem der anderen Fallfilmverdampfer der Endstufe mit der Lösung bei deren Abwärtsfließen durch die beheizte Zone in direkten Kontakt bringt.

2. Verfahren nach Anspruch 1, dadurch gekennzeichnet, daß man die Brüden aus dem Fallfilmverdampfer der Endstufe, dem man die Lösung zuerst zuführt, in alle übrigen Fallfilmverdampfer der Endstufe leitet.

3. Verfahren nach Anspruch 1 oder 2, dadurch gekennzeichnet, daß man im Fallfilmverdampfer der Endstufe, dem man die Lösung zuerst zuführt, bei einem höheren Druck als in den anderen Fallfilmverdampfern der Endstufe arbeitet.

4. Mehrstufige Eindampfanlage zum Aufkonzentrieren von Lösungen mit indirekt beheizten Verdampfern, wobei teilweise Brüden als Heizmedium dienen und die Endstufe der Eindampfanlage, in welcher die höchste Konzentration der Lösung erreicht wird, mit Frischdampf beheizt wird, dadurch gekennzeichnet, daß die Endstufe aus zwei bis vier mit Frischdampf beheizten Fallfilmverdampfern besteht und zwischen dem Fallfilmverdampfer der Endstufe, dem man Lösung mit der niedrigsten Konzentration zuführt, und mindestens einem der anderen Fallfilmverdampfer der Endstufe eine Verbindungsleitung für Brüden angeordnet ist.

5. Anlage nach Anspruch 4, dadurch gekennzeichnet, daß der Fallfilmverdampfer, in welchem die Verbindungsleitung für Brüden einmündet, einen durchlässigen Verteilerboden zwischen dem Auslaß der Leitung und der Heizzone des Verdampfers aufweist.

## Claims

1. A process of concentrating solutions by a multiple-effect evaporation in indirectly heated evaporators, wherein the solution is concentrated in part by means of vapor used as a heating fluid and the highest concentration of the solution is reached in a succeeding final evaporator stage, which is heated with live steam, characterized in that the final evaporator stage consists of two to four falling-film evaporators, which are indirectly heated with live steam and are consecutively flown through by the solution, vapor is withdrawn from that falling-film evaporator of the final stage which is the first to be supplied with the solution in and at least part of said vapor which has been withdrawn is directly contacted with the solution at least one of the other falling-film evaporators of the final stage.

2. A process according to claim 1, characterized in that the vapor from that falling-film evaporator of the final stage which is the first to be supplied with the solution is supplied to all other falling-film evaporators of the final stage.

3. A process according to claim 1 or 2, characterized in that the falling-film evaporator of the final stage which is the first to be supplied with the solution is operated under a higher pressure than the other falling-film evaporators of the final stage.

4. A multiple-effect evaporating plant for concentrating solutions is indirectly heated evaporators, wherein vapor is used in part as heating fluid and that the highest concentration of the solution is reached in the final stage of the evaporating plant, which final stage is heated with live steam, characterized in that the final stage consists of two to four falling-film evaporators, which are heated with live steam, and a connecting line for vapor is provided between that falling-film evaporator of the final stage which is supplied with the solution having the lowest concentration and least one of the other falling-film evaporators of the final stage.

5. A plant according to claim 4, characterized in that falling-film evaporator which is connected to the outlet end of the connecting line comprises a permeable distributor plate between the outlet of the line and the heating zone of the evaporator.

## Revendications

1. Procédé de concentration de solutions par évaporation en plusieurs étages dans des évaporateurs chauffés par voie indirecte, la solution étant concentrée partiellement en utilisant des buées comme milieu de chauffage et la concentration la plus grande de la solution étant obtenue dans un étage final à évaporateurs en aval et chauffé par de la vapeur vive, caractérisé en ce que l'étage final à évaporateurs est constitué de deux à quatre évaporateurs à film descendant, qui sont chauffés par voie indirecte par de la vapeur vive et dans lesquels passe successivement la solution, en ce que l'on soutire des buées de l'évaporateur à film descendant de l'étage final, auquel on envoie d'abord la solution, et on met au moins une partie de ces buées en contact direct, dans au moins l'un des autres évaporateurs à film descendant de l'étage final, avec la solution, lorsqu'elle s'écoule vers le bas dans la zone chauffée.

2. Procédé suivant la revendication 1, caractérisé en ce que l'on envoie d'abord les buées de l'évaporateur à film descendant de l'étage final, auquel on envoie d'abord la solution, à tous les autres évaporateurs à film descendant de l'étage final.

3. Procédé suivant la revendication 1 ou 2, caractérisé en ce que l'on opère, dans l'évaporateur à film descendant de l'étage final, auquel on envoie d'abord la solution, sous une pression plus grande que dans les autres évaporateurs à film descendant de l'étage final.

4. Installation d'évaporation à plusieurs étages pour concentrer des solutions, comprenant des évaporateurs chauffés par voie indirecte, des buées servant au moins partiellement de milieu de chauffage et l'étage final de l'installation d'évaporation, dans lequel est atteinte la concentration la plus grande de la solution, étant chauffé par de la vapeur vive, caractérisée en ce que l'étage final est constitué de deux à quatre évaporateurs à film descendant chauffés par de la vapeur vive, et entre l'évaporateur à film descendant de l'étage final, auquel on envoie la solution ayant la concentration la plus petite, et au moins l'un des autres évaporateurs à film descendant de l'étage final, est disposé un conduit de liaison pour des buées.

5. Installation suivant la revendication 4, caractérisée en ce que l'évaporateur à film descendant, dans lequel débouche le conduit de liaison pour des buées, comporte, entre la sortie du conduit et la zone de chauffage de l'évaporateur, un plateau répartiteur à travers lequel elles peuvent passer.

# Fig.1

# Fig.2